# EUROPÄISCHE PATENTSCHRIFT

(11) **EP 2 279 099 B1**
(45) Veröffentlichungstag und Bekanntmachung des Hinweises auf die Patenterteilung: **25.07.2018**
(21) Anmeldenummer: 09745626.3
(22) Anmeldetag: 27.03.2009
(51) Int. Cl.: B60R 21/0134, B60R 21/0132, B60R 21/0136

(54) **VERFAHREN UND STEUERGERÄT ZUR ANSTEUERUNG VON PERSONENSCHUTZMITTELN FÜR EIN FAHRZEUG**
METHOD AND CONTROLLER FOR ACTUATING PERSONAL PROTECTION MEANS FOR A VEHICLE
PROCÉDÉ ET ORGANE DE COMMANDE DE MOYENS DE PROTECTION DES PERSONNES POUR UN VÉHICULE

(30) Priorität: 15.05.2008 DE 102008001781
(43) Veröffentlichungstag der Anmeldung: 02.02.2011
(73) Patentinhaber: Robert Bosch GmbH, 70442 Stuttgart (DE)
(72) Erfinder: KUTTENBERGER, Alfred, 71083 Herrenberg (DE); THEISEN, Marc, 74354 Besigheim (DE)
(86) Internationale Anmeldenummer: PCT/EP2009/053675
(87) Internationale Veröffentlichungsnummer: WO 2009/138293

(56) Entgegenhaltungen:
- DE-A1- 10 065 518
- DE-A1- 10 324 217
- DE-A1-102005 003 354
- DE-A1-102005 033 937
- DE-A1-102006 038 837
- DE-A1-102007 015 768
- DE-C1- 10 140 119

## Beschreibung

### Stand der Technik

Die Erfindung betrifft ein Verfahren bzw. ein Steuergerät zur Ansteuerung von Personenschutzmitteln nach der Gattung der unabhängigen Patentansprüche.

Aus DE 103 24 217 A1 ist es bereits bekannt, in Abhängigkeit von Signalen einer Precrashsensorik eine präzise Ansteuerung von Rückhaltemitteln vorzunehmen.

Die DE 10 2007 015 768 A1 befasst sich mit einem Verfahren zum Betreiben eines Rückhaltesystems für Kraftfahrzeuge. Dabei wird der vordere Bereich des Fahrzeugs mittels eines Precrash-Erfassungssystems abgetastet. Precrash-Sensoren liefern unter anderem eine Aufprallzeit. Ferner werden Fahrzeugbeschleunigungssensoren überwacht. Dabei wird bestimmt, ob eine durch das Precrash-Erfassungssystem vorhergesagte Kollision von den am Fahrzeug montierten Beschleunigungssensoren innerhalb eines Kollisionszeitabstands zuzüglich eines Toleranzwerts bestätigt wird. Wenn die Kollision des Fahrzeugs bestätigt wird, wird eine vorhergesagte Aufprallzeit auf der Basis der von den Beschleunigungssensoren erhaltenen Daten angepasst.

### Offenbarung der Erfindung

Das erfindungsgemäße Verfahren bzw. das erfindungsgemäße Steuergerät zur Ansteuerung von Personenschutzmitteln für ein Fahrzeug mit den Merkmalen der unabhängigen Patentansprüche haben demgegenüber den Vorteil, eine verbesserte Verwendung der Precrashsignale und damit eine bessere Zusammenführung von Informationen der Precrashsensorik und der Beschleunigungssensorik möglich ist. Dies wird dadurch erreicht, dass das Precrashsignal in Abhängigkeit von einer Klassifizierung wenigstens einer Funktion bewertet wird. Dabei wird die Funktion in Abhängigkeit von wenigstens einem Precrashsignal beeinflusst. Damit ist es möglich Precrashsignale, die sich nicht auf das aktuelle Unfallobjekt beziehen, als Einflussfaktoren auf den Ansteuerungsalgorithmus für die Personenschutzmittel auszuschließen. Zumindest jedoch können die Signale der Precrashsensorik bewertet werden, um sie gemäß der Bewertung abzuschwächen oder zu verstärken. Dies gelingt durch wenigstens eine Funktion, die selbst in Abhängigkeit von dem wenigstens einen Precrashsignal beeinflusst wird. Diese Beeinflussung kann beispielsweise wie es aus den abhängigen Ansprüchen hervorgeht, über die aus den Precrashsignalen abgeleitete Zeit bis zum Aufprall ausgeführt werden. Die Funktion wird demnach in Abhängigkeit von dem Precrashsignal in ihrem Verlauf beeinflusst. Damit wird der Einfluss über die anschließende Bewertung des Precrashsignals mittels der Funktion auf einen Ansteuerungsalgorithmus bestimmt.

Vorliegend ist die Ansteuerung der Personenschutzmittel die Aktivierung solcher Personenschutzmittel wie ein Airbag, ein Gurtstraffer, eine crashaktive Kopfstütze oder bewegliche Sitzselemente etc.

Die Ansteuerung wird in Abhängigkeit von wenigstens einem Signal einer Aufprallsensorik und von wenigstens einem Precrashsignal durchgeführt. D. h. diese beiden Signale haben Einfluss auf die Art und ob die Personenschutzmittel angesteuert werden.

Bei dem Signal einer Aufprallsensorik kann es sich um alle möglichen Signale, auch abgeleitete Signale als Zwischenergebnisse von dem ursprünglichen Messsignal handeln. Zu solchen Vorverarbeitungen gehören Filterungen, Mittelwertbildungen, Integrationen, Aufsummationen oder andere Merkmalsbildungen.

Bei der Aufprallsensorik kann es sich um eine Beschleunigungssensorik, um eine Luftdrucksensorik, um eine Deformationssensorik oder beispielsweise um eine Körperschallsensorik handeln. Auch Kombinationen hiervon sind möglich.

Bei dem Precrashsignal kann es sich um alle möglichen Signale handeln, die von einer Precrashsensorik kommen oder aus solchen Signalen abgeleitet wurden. Als Beispiel für ein solches Precrashsignal ist die Zeit bis zum Aufprall von dem aktuellen Standort des Objekts zu dem eigenen Fahrzeug, mithin dem Egofahrzeug. Es handelt sich also um die Aufprallzeit, die auch englisch als time to impact (TTI) bezeichnet wird. Eine Alternative dazu ist der Abstand zwischen dem Objekt und dem Ego-Fahrzeug.

Als Precrashsensorik kommen dabei alle möglichen Umfeldsensoriken in Frage. Dazu gehören beispielsweise Radar, Ultraschall, Video oder eine kapazitive Umfeldsensorik. Auch das Precrashsignal kann alle möglichen Arten von Vorverabeitungen hinter sich haben, wie es eine Filterung, Mittelwertbildung, Integration usw. sein kann.

Auch bei der Funktion kann es sich um alle möglichen Funktionen handeln, beispielsweise gemäß der abhängigen Ansprüche um einen Zähler, der linear oder nichtlinear verändert werden kann. Die Klassifizierung der wenigstens einen Funktion bedeutet beispielsweise, welchen Wert die Funktion zu einem gegebenen Zeitpunkt hat. Entsprechend der Zugehörigkeit dieses Werts zu einem Wertebereich wird die Klassifizierung entsprechend diesem Wertebereich vorgenommen.

Unter dem Begriff Bewertung kann beispielsweise eine graduelle Einschränkung des Einflusses des Precrashsignals auf den Hauptalgorithmus verstanden werden oder auch ein Abschalten oder Zuschalten des Precrashsignals für die weitere Verarbeitung, ob die Ansteuerung der Personenschutzmittel erfolgen soll oder nicht.

Die Beeinflussung der Funktion in Abhängigkeit von dem wenigstens einen Precrashsignal bedeutet, dass die Funktion in Abhängigkeit vom Precrashsignal verändert wird. D. h. je nach dem aktuellen Precrashsignal wird die Funktion mehr oder weniger verändert. D. h. das Ausmaß der Veränderung wird durch das Precrashsignal bestimmt. Es liegt somit eine funktionelle Abhängigkeit vor.

Unter einem Steuergerät wird vorliegend ein elektrisches Gerät verstanden, das Sensorsignale verarbeitet und in Abhängigkeit davon an Steuersignale für die Personenschutzmittel ausgibt.

Die Schnittstelle sind vorwiegend hard- und/oder softwaremäßig ausgebildet. Bei einer hardwaremäßigen Ausbildung können die Schnittstellen beispielsweise Teil eines sogenannten System-ASICs sein, der verschiedenste Funktionen des Airbagsteuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung sind die Schnittstellen Softwaremodule, die beispielsweise auf einem Mikrocontroller neben anderen Softwaremodulen vorhanden sind und für die Bereitstellung des Precrashsignals und des Aufprallsignals zur Verfügung stehen.

Bei der Auswerteschaltung kann es sich beispielsweise um einen Prozessor, insbesondere auch um einen Mehrkernprozessor handeln. Alle möglichen Prozessortypen kommen hierfür in Frage, beispielsweise ein Mikrocontroller. Die Auswerteschaltung kann jedoch auch ein ASIC sein, bei dem die Funktionen der Auswerteschaltung nicht in Sofware, sondern in Hardware implementiert sind. Auch eine Kombination aus hard- und softwaremäßiger Implementierung ist vorliegend möglich. D. h. die Auswerteschaltung kann beispielsweise auch ein System aus einem Prozessor und einer Hardwareschaltung umfassen.

Bei dem Ansteuerungsalgorithmus kann es sich um alle möglichen Ansteuerungsalgorithmen handeln, die in der Lage sind, das Precrashsignal und das Aufprallsignal so zu verarbeiten, dass ein Ansteuersignal in Abhängigkeit von diesen Sensorsignalen erzeugt werden kann, wenn die Personenschutzmittel infolge der Unfallschwere anzusteuern sind. Dazu kann dann der Ansteuerungsalgorithmus beispielsweise Schwellwertvergleiche und insbesondere Klassifizierungen verwenden. Der Ansteuerungsalgorithmus kann insbesondere mehrere unabhängige Prozesse umfassen, die nebeneinander ablaufen.

Das Ansteuersignal kann alle möglichen Formen eines Signals annehmen. Insbesondere kann das Ansteuersignal die Information darüber enthalten, ob die Personenschutzmittel anzusteuern sind, wann die Personenschutzmittel anzusteuern sind, welche Personenschutzmittel anzusteuern sind und wie diese Personenschutzmittel anzusteuern sind. Vorteilhafterweise kann das Ansteuersignal über einen SPI (Serial Peripherial Interface)-Bus übertragen werden.

Bei der Ansteuerschaltung kann es sich ebenfalls insbesondere um einen integrierten Schaltkreis handeln, der beispielsweise auch Teil des sogenannten System-ASICs sein kann. Daneben ist auch eine diskrete oder eine eigene integrierte Lösung möglich.

Auch das Bewertungsmodul zur Bewertung des wenigstens einen Precrashsignals in Abhängigkeit von einer Klassifizierung wenigstens einer Funktion sowie das Beeinflussungsmodul zur Beeinflussung der Funktion in Abhängigkeit von dem wenigstens einen Precrashsignal können hard- und/oder softwaremäßig entsprechend der Auswerteschaltung ausgebildet sein. Vorliegend ist das Beeinflussungsmodul Element des Bewertungsmoduls, d. h. bei einer softwaremäßigen Ausprägung liegt ein Submodul im Vergleich zum Bewertungsmodul vor. Bei einer hardwaremäßigen Ausprägung bildet das Beeinflussungsmodul ein Teil der Schaltung, die das Bewertungsmodul umfasst.

Durch die in den abhängigen Ansprüchen angegeben Maßnahmen und Weiterbildungen sind vorteilhafte Verbesserungen des in den unabhängigen Patentansprüchen angegebenen Verfahrens bzw. Steuergeräts möglich.

Es ist vorteilhaft, dass die Funktion wenigstens einen Zähler aufweist, der dadurch beeinflusst wird, dass der wenigstens eine Zähler in Abhängigkeit von dem wenigstens einen Precrashsignal initialisiert wird. Die Funktion kann also einen oder mehrere Zähler aufweisen, wobei das Precrashsignal je nach seiner Ausprägung zu einer Initialisierung, d. h. zu einem Start des Zählers führt. Initialisierung kann in diesem Zusammenhang bedeuten, dass der Zähler auf Null gesetzt wird oder einen bestimmten Wert erhält, dass dann der Zähler imkrementiert bzw. dekementiert wird. Dies bedeutet vor allem, dass ein ankommendes aktuelles Precrashsignal zur Initialisierung verwendet wird, d.h. ein neues Precrashsignal führt zu einer Aktualisierung des Zählerstandes. Damit wird das erfindungsgemäße Verfahren genauer.

Es ist weiterhin vorteilhaft, dass der wenigstens eine Zähler in vorgegebenen Abständen dekrementiert wird, bis eine Schwelle erreicht wird, wobei bei dem Erreichen der Schwelle das wenigstens eine Precrashsignal zu diesem Zeitpunkt für die Ansteuerung vorgesehen wird. D. h. erreicht der Zähler durch die Dekrementierung die Schwelle, dann wird das Precrashsignal, das zu diesem Zeitpunkt vorliegt, für die Ansteuerung d. h. als Eingabeparameter in den Ansteuerungsalgorithmus vorgesehen. Für die vorgegebenen Abstände bedeutet vorliegend in einem Zyklus des Steuergeräts. Es kann jedoch auch ein anderer vorgegebener Abstand vorgegeben sein.

Der Steuergerätezyklus ist der Zeitzyklus, in welchem das Steuergerät bestimmte Aufgaben abarbeitet. Für die Reduzierung des TTI-Zählers ist der Realtimezyklus von 500 µs vorgesehen. Vorstellbar sind auch längere Zyklen aus dem Background, aber mit dem Echtzeitzyklus ist das erfindungsgemäße Verfahren genauer.

Bei dem Zähler kann es sich ebenfalls um eine hard- und/oder eine softwaremäßige Ausprägung handeln. Dies bestimmt sich nach der Ausprägung der Auswerteschaltung.

Es ist darüber hinaus von Vorteil, dass in Abhängigkeit von dem wenigstens einen Signal ein Aufprallzeitpunkt bestimmt wird und das vorgegebene Precrashsignal in Abhängigkeit von dem Aufprallzeitpunkt bewertet wird. D. h. liegt das Aufprallsignal vor, dann ist es tatsächlich zu einem Kontakt gekommen und anhand des Aufprallsignals kann der Aufprallzeitpunkt bestimmt werden. Dies kann beispielsweise dadurch geschehen, dass bei einem Beschleunigungssignal als dem Aufprallsignal eine sogenannte Rauschschwelle von 3 bis 6 g gesetzt wird, deren Überschreiten den Beginn des Crashes anzeigt. Eine andere Möglichkeit, den Kontaktzeitpunkt noch genauer zu bestimmen, ist anhand des vorliegenden Beschleunigungssignals den Nullpunkt des Beschleunigungssignals beispielsweise durch eine angenäherte Funktion auszurechnen bzw. zu bestimmen. Der so bestimmte Nullpunkt entspricht dann den Aufprallzeitpunkt (Kontaktzeitpunkt).

Mit dem Aufprallzeitpunkt kann dann das Precrashsignal, insbesondere wenn es selbst den Aufprallzeitpunkt gemäß der Analyse des Precrashsignals angibt, bewertet werden. Führt der Vergleich dieser beiden Aufprallzeitpunkte zu einem großen Abstand, dann wird das Precrashsignal nicht mehr weiter verwendet. Liegt jedoch der Aufprallzeitpunkt, der durch das Precrashsignal gewonnen wurde, in einem gewissen Bereich um den Aufprallzeitpunkt, der aus dem Aufprallsignal ermittelt wurde, dann kann das Precrashsignal ggf. mit leichten Veränderungen weiter verwendet werden. Der Aufprallzeitpunkt ist der Zeitpunkt, zu dem das Egofahrzeug auf das Aufprallobjekt trifft.

Um den Aufprallzeitpunkt, der durch das Precrashsignal bestimmt wurde, mit dem Aufprallzeitpunkt, der anhand des Aufprallsignals ermittelt wurde, zu vergleichen kann um den zweiten Aufprallzeitpunkt ein Akzeptanzfenster für den Aufprallzeitpunkt, der aus dem Precrashsignal ermittelt wurde, gelegt werden. In Abhängigkeit dann von diesem Akzeptanzfenster wird das Precrashsignal bewertet, d.h. liegt der Aufprallzeitpunkt gemäß dem Precrashsignal innerhalb des Akzeptanzfensters oder nicht. Das Akzeptanzfenster kann bezüglich seiner Ausdehnung in Abhängigkeit von Parametern wie der Eigengeschwindigkeit adaptiv ausgeführt werden.

Es ist weiterhin vorteilhaft, dass ein Blindbereich einer Precrashsensorik zur Erzeugung des Precrashsignals das Akzeptanzfenster zumindest umfasst. Der Blindbereich ist jener Bereich, der sehr nah am Fahrzeug liegt, in dem die Precrashsensorik aufgrund ihrer Auslegung ein Objekt nicht mehr erfassen kann. Das Akzeptanzfenster kann gleich diesem Blindbereich sein.

Es ist weiterhin vorteilhaft, dass im Blindbereich wenigstens ein Objekt mittels des wenigstens einen Zählers weiterverfolgt wird und ein neues Precrashsignal nur akzeptziert wird, wenn das neue Precrashsignal anhand des wenigstens einen Zählerstands plausibel ist. Dies bedeuetet, dass obwohl die Precrashsensorik das Objekt im Blindbereich nicht mehr verfolgen kann, dies anhand des Zählerstands zumindest rechnerisch weiter geschieht. Dann, wenn ein neues Precrashsignal wieder gewonnen wird, wird dieses Precrashsignal mit dem Zählerstand oder -verlauf derart verglichen, dass dieses neue Precrashsignal nur akzeptiert wird, wenn das neue Precrashsignal anhand des wenigstens einen Zählerstands plausibel ist. Es muss also auch hier eine gewisse Übereinstimmung vorliegen, d.h. das Objekt, das mit dem Zählerstand verfolgt wurde, liefert nun wieder ein Precrashsignal und dieses Precrashsignal kann dann zur Aktualisierung des Zählerstands verwendet werden. Auch dies kann mit einem entsprechenden Fenster geschehen.

Es ist weiterhin vorteilhaft, dass der Blindbereich verwendet wird, wenn das wenigstens eine Objekt nicht mehr erfassbar ist oder wenn das wenigstens eine Objekt verloren geht.

Weiterhin ist es vorteilhaft, dass das wenigstens eine Precrashsignal eine Aufprallzeit aufweist. Diese Aufprallzeit wird dann - wie oben angegeben - mit dem Aufprallzeitpunkt, der aus dem Aufprallsignal ermittelt wurde, verglichen.

Ausführungsbeispiele der Erfindung sind in der Zeichnung dargestellt und werden in der nachfolgenden Beschreibung näher erläutert.

Es zeigen
- Fig. 1: ein Blockschaltbild des erfindungsgemäßen Steuergeräts mit angeschlossenen Komponenten,
- Fig. 2: ein erstes Flussdiagramm des erfindungsgemäßen Verfahrens,
- Fig. 3: ein zweites Flussdiagramm des erfindungsgemäßen Verfahrens,
- Fig. 4: ein drittes Flussdiagramm des erfindungsgemäßen Verfahrens,
- Fig. 5: eine schematische Darstellung des Erfassungsbereichs der Precrashsensorik,
- Fig. 6: eine weitere schematische Darstellung und
- Fig. 7: eine weitere schematische Darstellung.

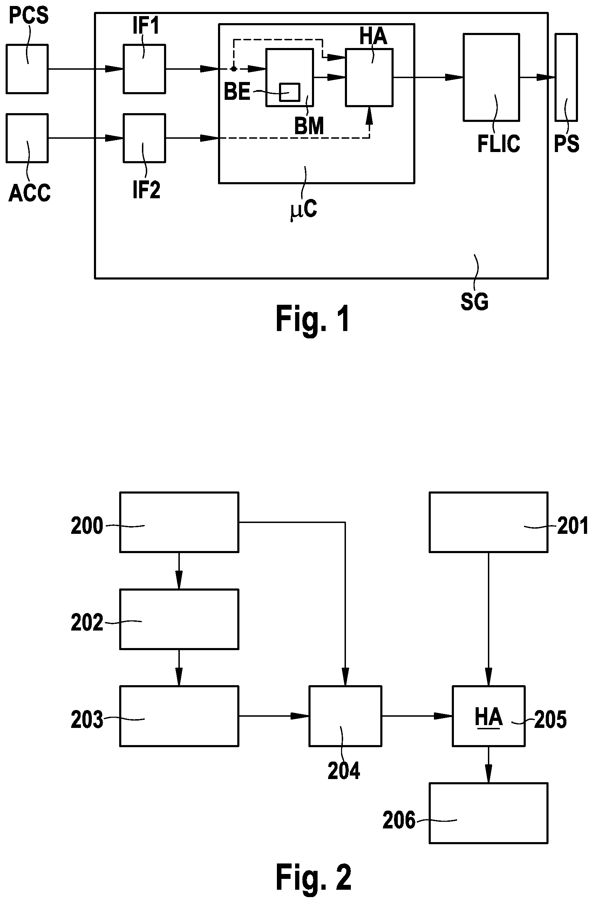

Fig. 1 zeigt in einem Blockschaltbild das erfindungsgemäße Steuergerät SG mit angeschlossenen Komponenten einer Precrashsensorik PCS, einer Beschleunigungssensorik ACC sowie Personenschutzmittel PS. Vorliegend sind nur die für das Verständnis der Erfindung notwendigen Komponenten beschrieben. Andere für den Betrieb des Steuergeräts SG notwendige Komponenten sind der Einfachheit halber weggelassen worden.

Bei der Precrashsensorik PCS handelt es sich beispielsweise um Radar und/oder Ultraschall und/oder Video und/oder kapazitiven Umfeldsensorik. Die Precrashsensorik PCS übermittelt ihre Signale vorverarbeitet oder roh beispielsweise digital an eine Schnittstelle IF1 im Steuergerät SG. Die Schnittstelle IF1 sieht zumindest eine Umformatierung der empfangenen Precrashsignale in ein für das Steuergerät SG vorgesehenes Format vor. In diesem Format beispeilsweise über den SPI (Serial Peripherial Interface) Bus werden die Precrashsignale an einen Mikrocontroller µC aus der Auswerteschaltung übertragen. Im Mikrocontroller µC sind verschiedene Softwaremodule vorgesehen. Zum einen wird eine Vorverarbeitung durch ein Bewertungsmodul BM mit einem Beeinflussungsmodul BE vorgesehen, und es ist ein Hauptalgorithmus HA vorgesehen, der das Ansteuersignal in Abhängigkeit von dem Precrashsignal und dem Beschleunigungssignal erzeugt. Dafür werden - wie gestrichelt dargestellt - diese Signale an den Hauptalgorithmus übertragen.

Es kann vorgesehen sein, dass eine Vorverarbeitung vorgesehen ist, die beispielsweise das Precrashsignal oder das Beschleunigungssignal entsprechend für den Hauptalgorithmus HA aufbereiten. Das Precrashsignal geht jedoch weiterhin zur Vorverarbeitung in ein Bewertungsmodul BM ein. Das Bewertungsmodul BM ist dafür vorgesehen, Precrashsignale nicht an den Hauptalgorithmus weiterzugeben oder deren Weiterverarbeitung zu erlauben, die nicht mit dem aktuellen Aufprallobjekt etwas zu tun haben. Auch Precrashsignale, die unplausibel sind, sollen damit ausgesondert werden. Dafür weist das Bewertungsmodul ein Beeinflussungsmodul BE vor, dass eine Funktion in Abhängigkeit vom Precrashsignal beeinflusst. Bei der Funktion handelt es sich vorliegend um einen Zähler, der in Ahbängigkeit vom Precrashsignal dekrementiert wird. Der Zähler wird vom ersten Auftreten des Precrashsignals initialisiert. Mit jedem neuen Precrashsignal kann der Zählerstand verändert werden, wobei der Zähler in Abhängigkeit vom Zyklus des Steuergeräts dekrementiert wird. Damit gelingt dann, wenn das Objekt beispielsweise in einem Blindbereich des Fahrzeugs eindringt eine Weiterverfolgung des Objekts anhand des Zählers. Das Precrashsignal wird üblicherweise die Zeit bis zum Aufprall die sogenannte Time to Impact = TTI verwendet. Hat der Zähler eine vorgegebene Schwelle erreicht, dann wird das Precrashsignal, das zu diesem Zeitpunkt vorliegt, für die Verarbeitung im Hauptalgorithmus HA verwendet.

Der Hauptalgorithmus HA sorgt dann in Abhängigkeit vom Signal des Bewertungsmoduls BM dafür, dass das Precrashsignal verwendet wird oder nicht. In Abhängigkeit von dieser Entscheidung und dem Beschleunigungssignal führt dann der Hauptalgorithmus HA seinen Algorithmus durch und erzeugt ggf. ein Ansteuersignal für die Ansteuerschaltung FLIC, die sich außerhalb des Mikrocontrollers µC befindet. Dieses Ansteuersignal wird der Ansteuerschaltung FLIC, beispielsweise auch über den SPI-Bus, zugeführt. Die Ansteuerschaltung FLIC besorgt dann die Ansteuerung der Personenschutzmittel PS, indem beispielsweise die Zündelemente von pyrotechnischen Personenschutzmitteln bestromt werden und damit zur Auslösung gebracht werden. Aber auch reversible Personenschutzmittel wie crashaktive Kopfstützen, elektromotorische Gurtstraffer usw. können dadurch angesteuert werden, indem auch sie entsprechend bestromt werden.

Neben der Beschleunigungssensorik ACC kann auch jede andere Aufprallsensorik zusätzlich oder anstatt verwendet werden.

Figur 2 zeigt in einem Flussdiagramm den Ablauf des erfindungsgemäßen Verfahrens. In Verfahrensschritt 200 wird das Precrashsignal bereitgestellt, beispielsweise von der Schnittstelle IF1. In Verfahrensschritt 201 wird das Aufprallsignal durch die Schnittstelle IF2 bereitgestellt. Das Precrashsignal sorgt in Verfahrensschritt 202 dafür, dass die Funktion, die vorliegend verwendet wird, beispielsweise der Zähler, entsprechend diesem Precrashsignal beeinflusst wird, beispielsweise, indem der Zählerstand entsprechend dem Precrashsignal gesetzt wird. In Verfahrensschritt 203 wird dann eine Klassifizierung dieser Funktion durchgeführt, beispielsweise wie oben dargestellt, wenn durch die regelmäßige Dekrementierung ein Schwellwert erreicht wird. In Verfahrensschritt 204 wird dann anhand der Klassifikation entschieden, ob das Precrashsignal weiter zum Hauptalgorithmus 205 weitergegeben wird. In den Hauptalgorithmus 205 geht auch das Aufprallsignal ein. Der Hauptalgorithmus 205 entscheidet dann, ob in Verfahrensschritt 206 die Personenschutzmittel PS angesteuert werden.

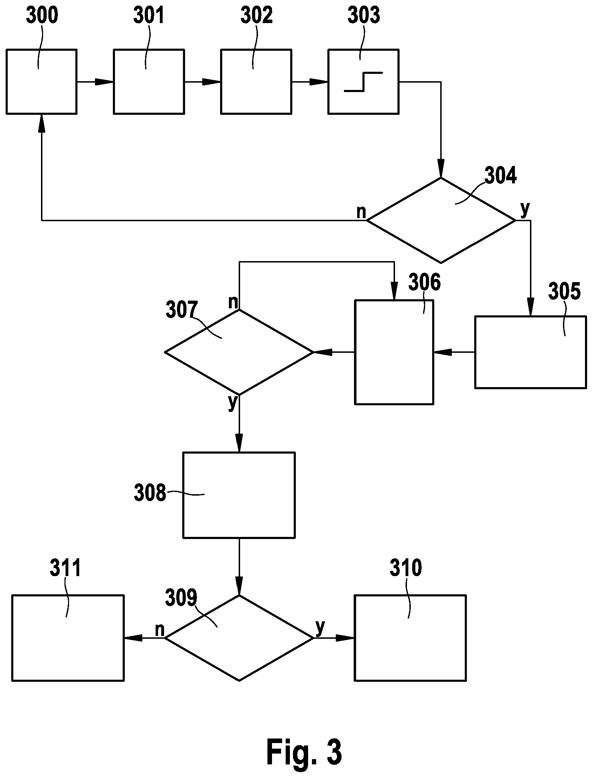

Figur 3 zeigt ein weiteres Flussdiagramm des erfindungsgemäßen Verfahrens. In Verfahrensschritt 300 wird die Zeit bis zum Aufprall, also die Aufprallzeit, als Precrashsignal bereitgestellt. Damit wird dann in Verfahrensschritt 301 ein Zähler initialisiert. In Verfahrensschritt 302 wird pro Zyklus des Steuergeräts dieser Zähler dekrementiert. In Verfahrensschritt 303 wird dann der Schwellwertvergleich durchgeführt. In Verfahrensschritt 304 wird geprüft, wie der Schwellwertvergleich ausgegangen ist. Ist die Schwelle noch nicht erreicht worden, dann wird zurück zu Verfahrensschritt 300 gesprungen und es wird die aktuelle Aufprallzeit aus dem aktuellen Precrashsignal verwendet. Dann geht es wieder mit Verfahrensschritt 301 weiter.

Wurde jedoch in Verfahrensschritt 304 festgestellt, dass die Schwelle erreicht wurde, dann wird in Verfahrensschritt 305 die Aufprallzeit, also das Precrashsignal, verwendet und zwar für die weitere Verarbeitung. In Verfahrensschritt 306 wird der Zähler weiter dekrementiert, um über diesen Zählerstand das Objekt weiterzuverfolgen. In Verfahrensschritt 307 wird geprüft, ob anhand des Signals der Aufprallsensorik ein Aufprall festgestellt wurde. Ist das nicht der Fall, wird zu Verfahrensschritt 306 zurückgesprungen.

Wurde jedoch in Verfahrensschritt 307 festgestellt, dass ein Aufprall stattgefunden hat, dann wird in Verfahrensschritt 308 geprüft, ob der anhand des Aufprallsignals ermittelte Aufprallzeitpunkt mit der Aufprallzeit aus dem Precrashsignal unter Zulassung bestimmter Abweichungen noch zulässig ist. In Verfahrensschritt 309 wird das Ergebnis aus Verfahrensschritt 308 geprüft. Ist die Aufprallzeit korrekt, dann wird das Precrashsignal mit in die Aufprallzeit in Verfahrensschritt 310 im Algorithmus weiterverwendet, beispielsweise um eine Kennlinie zu beeinflussen. Ist das nicht der Fall, dann wird in Verfahrensschritt 311 entschieden, das Precrashsignal nicht im Hauptalgorithmus HA weiterzuverwenden.

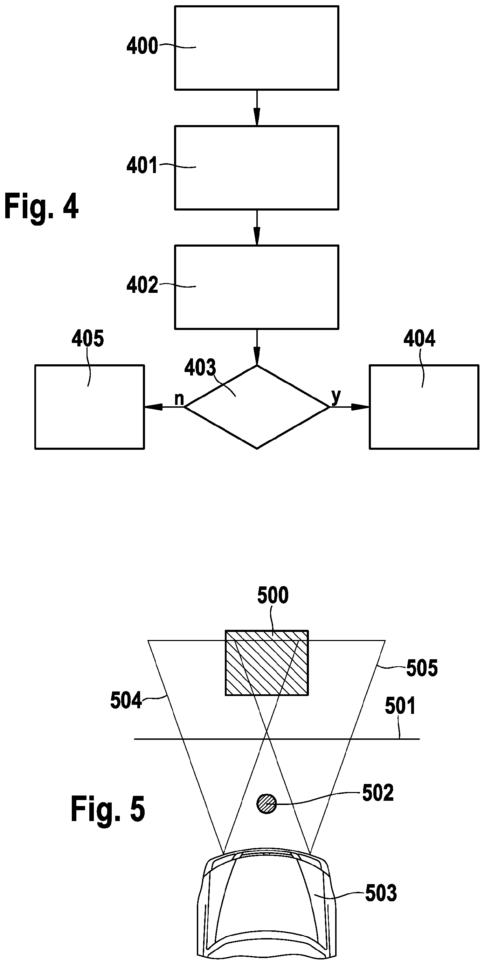

In Figur 4 wird ein weiteres Flussdiagramm des erfindungsgemäßen Verfahrens dargestellt. In Verfahrensschritt 400 wird der Blindbereich für das aktuell verfolgte Objekt festgestellt. In Verfahrensschritt 401 wird das Objekt wieder über die Precrashsensorik erkannt, wobei in Verfahrensschritt 402 das Precrashsignal anhand des Zählersignals plausibilisiert wird. In Verfahrensschritt 403 wird dann überprüft, wie dieser Vergleich abgelaufen ist. Ist also der Zählerstand und das erneute Precrashsignal plausibel. Ist das Precrashsignal plausibel, dann wird in Verfahrensschritt 404 dieses Precrashsignal als aktuelles Precrashsignal genommen und der Zähler entsprechend verändert. Ist das nicht der Fall, dann wird in Verfahrensschritt 405 entschieden, den Zählerstand so zu belassen und dieses neue Precrashsignal zu ignorieren.

Figur 5 zeigt in einer schematischen Darstellung einen Blindbereich 501 für die Precrashsensorik, die durch die Dreiecke 504 und 505 mit ihren Erfassungsbereichen dargestellt ist. Vorliegend ist das verfolgte Objekt 502 im Blindbereich und ein neues Objekt 500 im Erfassungsbereich 504 bzw. 505. Unterschreitet ein Objekt den Abstand 501, also den Blindbereich, dann wird das Precrashsignal zum Erreichen dieses Abstandes für die weitere Betrachtung eingefroren und der Zähler weiter dekrementiert. Damit kann dann ein neues Signal, das durch das Objekt 500 erzeugt wird, als unplausibel für das Objekt 502 klassifiziert werden. Das neue Objekt 500 wird dann demnach nicht weiterverfolgt. Das Fahrzeug 503 weist vorliegend schematisch dargestellt nur zwei Sensoren, die die Erfassungsbereiche 504 und 505 erzeugen, auf.

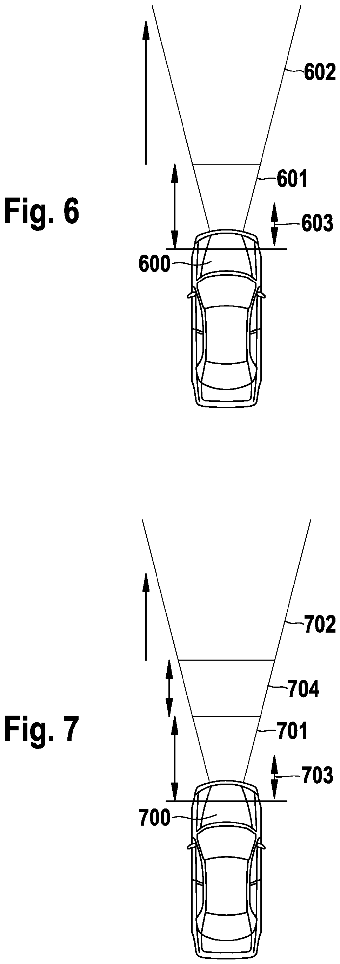

In der schematischen Darstellung gemäß Figur 6 wird das sogenannte "normale Fenster 602" angegeben, das bedeutet, dass, wenn ein Objekt verloren ist, es vom Precrashalgorithmus nicht mehr weiter verfolgt wird. Ein neues Objekt wird jedoch vom Precrashalgorithmus verfolgt. In dem engeren, sogenannten "Lock-Window" geschieht nun Folgendes: Wenn ein Objekt hier verloren wird, setzt der Precrashalgorithmus dennoch die Verfolgung fort und wenn ein neues Objekt gesehen wird, wird vom Precrashalgorithmus nur das alte Objekt verfolgt. Vorliegend ist noch eine Asymmetrie vorgesehen.

Mit der Asymmetrie soll ein Freiheitsgrad bei der Parametereinstellung ermöglicht werden. So kann der Akzeptanzbereich "nach" T0 unabhängig vom Lockfenster und dem Akzeptanzbereich vor T0 eingestellt werden.

Im sogenannten "Akzeptanzfenster 603" wird jedoch ein neues Precrashsignal akzeptiert, wenn der Zählerstand und die Aufprallzeit innerhalb des Akzeptanzfensters sind.

Figur 7 zeigt eine weitere schematische Darstellung mit einer weiteren Variante. Wieder wird ein Normalfenster 702 vorgesehen und das sogenannte Lock-Window 701 und das Akzeptanzfenster 703. Was zwischen dem Lock-Window und dem normalen Fenster 702 noch vorgesehen ist, ist das sogenannte "Catch-Window" 704. Im Catch-Window 704 wird bewirkt, dass, auch wenn ein Objekt verloren wird, der Precrashzähler im Catch-Window nicht zurückgesetzt wird, sondern weiterzählt. Im Unterschied zum sogenannten Normal-Fenster wird der Zähler jedoch auf die neuen Werte gesetzt, wenn diese Werte zu einem Precrashobjekt gehören, z. B. die Zeit bis zum Aufprall oder die Aufprallgeschwindigkeit und ungleich der sogenannten "Default-Werte" sind.

Die Default-Werte sind die Werte, welche der Precrashsensor übermittelt, wenn kein Objekt ermittelt wurde, z. B. CV = 0 km/h und TTI der Maximalwert des Übermittlungsbereichs z. B. 2,5 s.

## Patentansprüche

1. Verfahren zur Ansteuerung von Personenschutzmitteln (PS) für ein Fahrzeug (FZ) mit folgenden Verfahrensschritten:
Ansteuern der Personenschutzmittel (PS) in Abhängigkeit von wenigstens einem Signal einer Aufprallsensorik (ACC) und wenigstens einem Precrashsignal, wobei das wenigstens eine Precrashsignal in Abhängigkeit von einer Klassifizierung wenigstens eines Zählers bewertet wird, wobei der Zähler in Abhängigkeit von dem wenigstens einen Precrashsignal dadurch beeinflusst wird, dass der wenigstens eine Zähler in Abhängigkeit von dem wenigstens einen Precrashsignal initialisiert wird, wobei der wenigstens eine Zähler in vorgegebenen Abständen inkrementiert oder dekrementiert wird, bis eine Schwelle erreicht wird, wobei bei dem Erreichen der Schwelle das wenigstens eine Precrashsignal zu diesem Zeitpunkt für die Ansteuerung vorgesehen wird, wobei in Abhängigkeit von dem wenigstens einen Signal ein Aufprallzeitpunkt bestimmt wird und das vorgegebene Precrashsignal in Abhängigkeit vom anhand des Aufprallsignals ermittelten Aufprallzeitpunkt bewertet wird, wobei um den Aufprallzeitpunkt aus dem Precrashsignal ein Akzeptanzfenster für das wenigstens eine Precrashsignal gelegt wird und das wenigstens eine Precrashsignal in Abhängigkeit von dem Akzeptanzfenster bewertet wird,
**dadurch gekennzeichnet, dass**
ein Blindbereich einer Precrashsensorik zur Erzeugung des Precrashsignals das Akzeptanzfenster zumindest umfasst und im Blindbereich wenigstens ein Objekt mittels des wenigstens einen Zählers weiterverfolgt wird und ein neues Precrashsignal nur akzeptiert wird, wenn das neue Precrashsignal anhand des wenigstens einen Zählers plausibel ist.

2. Verfahren nach Anspruch 1, **dadurch gekennzeichnet, dass** der Blindbereich verwendet wird, wenn das wenigstens eine Objekt nicht mehr erfassbar ist oder wenn das wenigstens eine Objekt verloren wird.

3. Verfahren nach einem der vorhergehenden Ansprüche, **dadurch gekennzeichnet, dass** das wenigstens eine Precrashsignal eine Aufprallzeit aufweist.

4. Steuergerät (SG) zur Ansteuerung von Personenschutzmitteln (PS) für ein Fahrzeug (FZ) mit:
- einer ersten Schnittstelle (IF1), die wenigstens ein Precrashsignal bereitstellt
- einer zweiten Schnittstelle (IF2), die wenigstens ein Aufprallsignal bereitstellt
- eine Auswerteschaltung (µC), die einen Ansteuerungsalgorithmus (HA) zur Erzeugung eines Ansteuersignals in Abhängigkeit von dem wenigstens einen Precrashsignal und dem wenigstens einen Aufprallsignal aufweist
- eine Ansteuerschaltung (FLIC) zur Ansteuerung der Personenschutzmittel (PS) in Abhängigkeit von einem Ansteuersignal, wobei die Auswerteschaltung (µC) ein Bewertungsmodul (BM) zur Bewertung des wenigstens einen Precrashsignals in Abhängigkeit von einer Klassifizierung wenigstens eines Zählers aufweist, wobei das Bewertungsmodul (BM) ein Beeinflussungsmodul (BE) zur Beeinflussung des Zählers in Abhängigkeit von dem wenigstens einen Precrashsignal aufweist, wobei der Zähler in Abhängigkeit von dem wenigstens einen Precrashsignal dadurch beeinflusst wird, dass der wenigstens eine Zähler in Abhängigkeit von dem wenigstens einen Precrashsignal initialisiert wird, wobei der wenigstens eine Zähler in vorgegebenen Abständen imkrementiert oder dekrementiert wird, bis eine Schwelle erreicht wird, wobei bei dem Erreichen der Schwelle das wenigstens eine Precrashsignal zu diesem Zeitpunkt für die Ansteuerung vorgesehen wird, wobei in Abhängigkeit von dem wenigstens einen Signal ein Aufprallzeitpunkt bestimmt wird und das vorgegebene Precrashsignal in Abhängigkeit vom anhand des Aufprallsignals ermittelten Aufprallzeitpunkt bewertet wird, wobei um den Aufprallzeitpunkt aus dem Precrashsignal ein Akzeptanzfenster für das wenigstens eine Precrashsignal gelegt wird und das wenigstens eine Precrashsignal in Abhängigkeit von dem Akzeptanzfenster bewertet wird, **dadurch gekennzeichnet, dass** ein Blindbereich einer Precrashsensorik zur Erzeugung des Precrashsignals das Akzeptanzfenster zumindest umfasst und im Blindbereich wenigstens ein Objekt mittels des wenigstens einen Zählers weiterverfolgt wird und ein neues Precrashsignal nur akzeptiert wird, wenn das neue Precrashsignal anhand des wenigstens einen Zählers plausibel ist.

## Claims

1. Method for actuating personal protection means (PS) for a vehicle (FZ), having the following method steps of:
actuating the personal protection means (PS) on the basis of at least one signal from an impact sensor system (ACC) and at least one pre-crash signal, wherein the at least one pre-crash signal is assessed on the basis of a classification of at least one counter, wherein the counter is influenced on the basis of the at least one precrash signal by virtue of the at least one counter being initialized on the basis of the at least one pre-crash signal, wherein the at least one counter is incremented or decremented at predefined intervals until a threshold is reached, wherein, upon reaching the threshold, the at least one precrash signal is provided at this time for actuation, wherein an impact time is determined on the basis of the at least one signal, and the predefined pre-crash signal is assessed on the basis of the impact time determined on the basis of the impact signal, wherein an acceptance window for the at least one pre-crash signal is placed around the impact time from the pre-crash signal, and the at least one pre-crash signal is assessed on the basis of the acceptance window,
**characterized in that**
a blind range of a pre-crash sensor system for generating the pre-crash signal at least comprises the acceptance window, and at least one object is pursued in the blind range by means of the at least one counter, and a new pre-crash signal is accepted only if the new pre-crash signal is plausible on the basis of the at least one counter.

2. Method according to Claim 1, **characterized in that** the blind range is used if the at least one object can no longer be captured or if the at least one object is lost.

3. Method according to one of the preceding claims, **characterized in that** the at least one pre-crash signal has an impact time.

4. Control device (SG) for actuating personal protection means (PS) for a vehicle (FZ), having:
- a first interface (IF1) which provides at least one pre-crash signal,
- a second interface (IF2) which provides at least one impact signal,
- an evaluation circuit (µC) which has an actuation algorithm (HA) for generating an actuation signal on the basis of the at least one pre-crash signal and the at least one impact signal,
- an actuation circuit (FLIC) for actuating the personal protection means (PS) on the basis of an actuation signal, wherein the evaluation circuit (µC) has an assessment module (BM) for assessing the at least one pre-crash signal on the basis of a classification of at least one counter, wherein the assessment module (BM) has an influencing module (BE) for influencing the counter on the basis of the at least one pre-crash signal, wherein the counter is influenced on the basis of the at least one pre-crash signal by virtue of the at least one counter being initialized on the basis of the at least one pre-crash signal, wherein the at least one counter is incremented or decremented at predefined intervals until a threshold is reached, wherein, upon reaching the threshold, the at least one pre-crash signal is provided at this time for actuation, wherein an impact time is determined on the basis of the at least one signal, and the predefined pre-crash signal is assessed on the basis of the impact time determined on the basis of the impact signal, wherein an acceptance window for the at least one pre-crash signal is placed around the impact time from the pre-crash signal, and the at least one pre-crash signal is assessed on the basis of the acceptance window, **characterized in that** a blind range of a pre-crash sensor system for generating the pre-crash signal at least comprises the acceptance window, and at least one object is pursued in the blind range by means of the at least one counter, and a new pre-crash signal is accepted only if the new pre-crash signal is plausible on the basis of the at least one counter.

## Revendications

1. Procédé destiné à commander des moyens de protection des personnes (PS) pour un véhicule (FZ), comprenant les étapes de procédé consistant à :
commander les moyens de protection des personnes (PS) en fonction d'au moins un signal d'un système de capteur d'impact (ACC) et d'au moins un signal de pré-collision, dans lequel ledit au moins un signal de pré-collision est évalué en fonction d'une classification d'au moins un compteur, dans lequel le compteur est influencé en fonction dudit au moins un signal de pré-collision en initialisant ledit au moins un compteur en fonction dudit au moins un signal de pré-collision, dans lequel ledit au moins un compteur est incrémenté ou décrémenté à des intervalles prédéterminés jusqu'à ce qu'un seuil soit atteint, dans lequel, lorsque le seuil est atteint, ledit au moins un signal de pré-collision est prédit à cet instant pour la commande, dans lequel un instant d'impact est déterminé en fonction dudit au moins un signal et le signal de pré-collision prédéterminé est évalué en fonction de l'instant d'impact obtenu sur la base du signal d'impact, dans lequel une fenêtre d'acceptation pour ledit au moins un signal de pré-collision est appliquée autour de l'instant d'impact à partir du signal de pré-collision et ledit au moins un signal de pré-collision est évalué en fonction de la fenêtre d'acceptation,
**caractérisé en ce qu'**une zone aveugle d'un système de capteur de pré-collision destiné à générer le signal de pré-collision comprend au moins la fenêtre d'acceptation, **en ce qu'**au moins un objet est poursuivi dans la zone aveugle au moyen dudit au moins un compteur et **en ce qu'**un nouveau signal de pré-collision n'est accepté que si le nouveau signal de pré-collision est plausible sur la base dudit au moins un compteur.

2. Procédé selon la revendication 1, **caractérisé en ce que** la zone aveugle est utilisée si ledit au moins un objet ne peut plus être détecté ou si ledit au moins un objet est perdu.

3. Procédé selon l'une des revendications précédentes, **caractérisé en ce que** ledit au moins un signal de pré-collision comporte un temps d'impact.

4. Appareil de commande (SG) destiné à commander des moyens de protection des personnes (PS) pour un véhicule (FZ), comportant :
- une première interface (IF1) qui fournit au moins un signal de pré-collision,
- une deuxième interface (IF2) qui fournit au moins un signal d'impact,
- un circuit d'évaluation (µC) qui comporte un algorithme de commande (HA) destiné à générer un signal de commande en fonction dudit au moins un signal de pré-collision et dudit au moins un signal d'impact,
- un circuit de commande (FLIC) destiné à commander les moyens de protection des personnes (PS) en fonction d'un signal de commande, dans lequel le circuit d'évaluation (µC) comporte un module d'évaluation (BM) destiné à évaluer ledit au moins un signal de pré-collision en fonction d'une classification d'au moins un compteur, dans lequel le module d'évaluation (BM) comporte un module d'influence (BE) destiné à influencer le compteur en fonction dudit au moins un signal de pré-collision, dans lequel le compteur est influencé en fonction dudit au moins un signal de pré-collision en initialisant ledit au moins un compteur en fonction dudit au moins un signal de pré-collision, dans lequel ledit au moins un compteur est incrémenté ou décrémenté à des intervalles prédéterminés jusqu'à ce qu'un seuil soit atteint, dans lequel, lorsque le seuil est atteint, ledit au moins un signal de pré-collision est prédit à cet instant pour la commande, dans lequel un instant d'impact est déterminé en fonction dudit au moins un signal et le signal de pré-collision prédéterminé est évalué en fonction de l'instant d'impact obtenu sur la base du signal d'impact, dans lequel une fenêtre d'acceptation pour ledit au moins un signal de pré-collision est appliquée autour de l'instant d'impact à partir du signal de pré-collision et au moins un signal de pré-collision est évalué en fonction de la fenêtre d'acceptation, **caractérisé en ce qu'**une zone aveugle d'un système de capteur de pré-collision destiné à générer le signal de pré-collision comprend au moins la fenêtre d'acceptation, **en ce qu'**au moins un objet est poursuivi dans la zone aveugle au moyen dudit au moins un compteur et **en ce qu'**un nouveau signal de pré-collision n'est accepté que si le nouveau signal de pré-collision est plausible sur la base dudit au moins un compteur.
